# EUROPEAN PATENT SPECIFICATION

(11) **EP 0 383 731 B1**
(45) Date of publication and mention of the grant of the patent: **23.02.1994**
(21) Application number: 90830042.9
(22) Date of filing: 06.02.1990
(51) Int. Cl.: B60K 41/24

(54) **A device for the automatic engagement and disengagement of the clutch of a motor vehicle**
Vorrichtung zum automatischen Ein- und Ausrücken einer Kupplung eines Kraftfahrzeuges
Dispositif d'engagement et de désengagement automatiques de l'embrayage d'un véhicule à moteur

(30) Priority: 17.02.1989 IT 6710389
(43) Date of publication of application: 22.08.1990
(73) Proprietor: FIAT AUTO S.p.A., 10135 Torino (IT)
(72) Inventor: Garrone, Felice, I-10137 Torino (IT)
(74) Representative: Quinterno, Giuseppe

(56) References cited:
- EP-A- 0 179 723
- EP-A- 0 205 322
- GB-A- 2 163 511
- US-A- 4 505 364
- PATENT ABSTRACTS OF JAPAN, vol. 12, no. 437 (M-765), 17th November 1988, page 15 M 765; & JP-A-63 170 151 (ISUZU MOTORS LTD) 14-07-1988
- PATENT ABSTRACTS OF JAPAN, vol. 10, no. 281 (M-520)[2337], 25th September 1986, page 142 M 520; & JP-A-61 102 334 (HINO MOTORS LTD) 21-05-1986

## Description

The present invention relates to a device for the engagement and disengagement of the clutch of a motor vehicle, which is particularly suitable for a four-wheel-drive racing car.

In cars with particularly boosted performance, such as, for example, four-wheel-drive cars for road-racing, reductions are sought in the dead times during gear changing when the power of the engine cannot be discharged to the ground by the wheels. The problem is accentuated in those cars which have engines with power curves which are particularly favourable only at restricted rates of revolution of the engine; this obviously requires a greater number of gear changes, which involves a greater number of disengagements and engagements of the clutch and certainly leads to an increase in the total time during which the power of the engine cannot be discharged to the ground.

Another particularly important problem in the use of high-performance motor cars results from the fact that, if while driving the clutch is raised too abruptly after a gear change, the frictional torque acting on the driving wheels may be less than the driving torque acting thereon, with the result that "wheel-spin" occurs, that is, the driving wheels slide on the ground and do not succeed in transmitting the engine power thereto, with consequent reductions in the overall performance of the motor car.

In this connection, solutions for the electronic control of the clutch have been proposed: these systems replace the clutch pedal with an electronically-managed control; the driver retains complete control of the gear change but no longer needs to lower the clutch pedal, disengage the previous gear, engage the desired gear, and raise the clutch pedal whilst simultaneously pressing the accelerator.

Known automatic systems for the automatic engagement and disengagement of the clutch of a motor vehicle achieve the engagement and the disengagement of the clutch by means of an electro-mechanical actuator fitted to the gearbox. The latter is operated by an electronic control unit which receives information of a gear change required by the driver, who acts on the gear-change lever in a conventional manner; the electronic control unit sends signals to the electro-mechanical actuator on the basis of pulses which come from sensors and are processed according to differentiated operating sequences previously laid down in the microprocessor.

The present invention relates more particularly to a device for the automatic engagement and disengagement of the clutch of a motor vehicle, which is particularly suitable for a four-wheel-drive racing car, including sensor means for sensing the operating conditions of the gearbox of the vehicle, sensor means for sensing the operating condition of the engine of the motor vehicle, and an electronic control unit for processing the information generated by the sensors and for generating signals in turn for an actuator for the automatic engagement or disengagement of the clutch.

A system of this kind is disclosed in FR-A-0 179 723.

It is also known from PATENT ABSTRACTS OF JAPAN, vol. 10, No. 281 (M-520) [2337], 25th September 1986, page 142 M 520, & JP-A-61 102 334, 21-05-1986, to provide a system for the automatic engagement and disengagement of the clutch of a motor vehicle, which includes auxiliary means for the voluntary disengagement of the clutch, which are connected to the electronic control unit and are operable as a result of the operation of the handbrake of the motor vehicle. This system is however meant to prevent driving off with the park brake applied.

The present invention proposes to resolve the above-outlined problem providing a system adapted to determine the automatic disengagement of the clutch of a motor vehicle whenever the hand brake is applied while driving.

According to the invention, this problem is resolved by a device for the automatic engagement and disengagement of the clutch of a motor vehicle of the type described above, which has the further characteristic that it also includes a sensor of the handbrake of the vehicle, which sensor is connected to the electronic control unit, so that while driving the clutch is automatically disengaged as a result of the activation of the handbrake.

The dependent claims cover some advantageous solutions of the clutch device according to the invention.

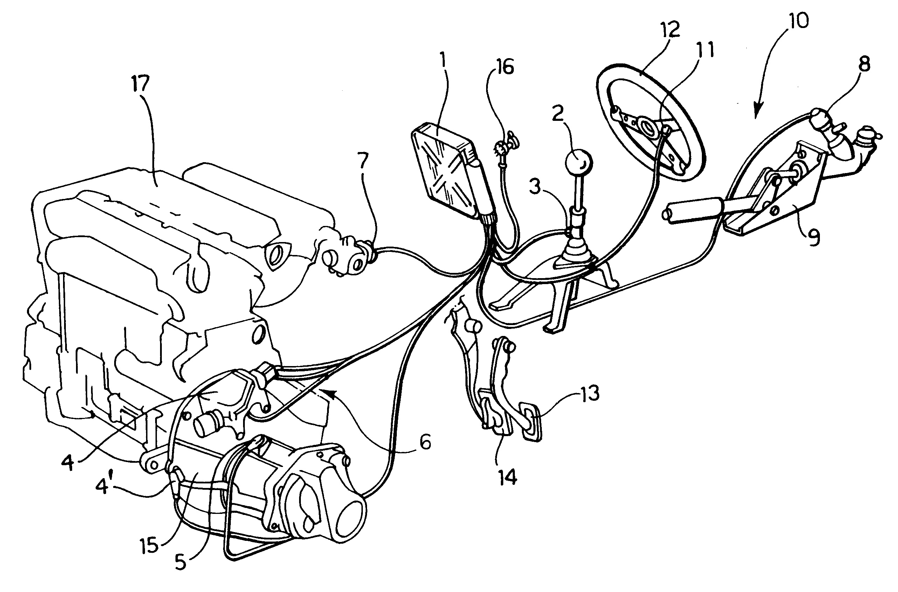

The invention will better be understood with reference to the appended drawing in which:
- the single drawing is a schematic perspective view of the device according to the invention.

The device 10 for the automatic engagement and disengagement of the clutch of a motor vehicle includes a central electronic control unit 1 to which the signals generated by various sensors fitted to the engine 17 and the gearbox 15 of the motor vehicle are sent; the control unit 1 sends operating signals to the actuator 4 which is, for example, electro-mechanical and engages or disengages the clutch. In the non-limiting example of the drawings, there are four position sensors: a gear-lever direction sensor 3, two gear-engaged position sensors 6, and a throttle-valve position sensor 7. Two speed sensors are also provided on the gearbox 15: a gearbox main-drive-pinion revolution sensor 5 and an engine-revolution sensor 4'. A gear-lever direction sensor 3 is also provided on the gear lever 2. The central electronic control unit 1 can be programmed with an unlimited number of different operating sequences based, for example, on the ground-traction conditions (asphalt, soil, snow); these programs are selected by the program selector 16. The vehicle has only two pedals, the accelerator 14 and the brake pedal 13. Arranged within the vehicle, near the driver, are a push-button 11, for example, on the steering wheel 12, and a pressure switch 8 ("pressure transmitter") in the supply of the hydraulic handbrake circuit 9.

The engagement of the clutch by means of the operating sequence operated by the central electronic control unit 1 can take place below a certain minimum angular velocity of the engine (predetermined at the design stage), in dependence on the rate of revolution of the engine and/or the opening of the throttle valve, or it can take place above the minimum angular velocity of the engine, which may, for example be 1200 revolutions/minute, by means of a law preset on the basis of the ground traction and the preselected management program.

Above this minimum angular velocity of the engine, therefore, a "racing" start from a standstill is made possible by the push-button 11 which, if pushed, enables the voluntary disengagement of the clutch so that the engine can be brought to the best running speed for starting; when the button is released, the clutch is engaged gradually at a rate which depends on the ground traction, according to a preselected management program. It is clear that this type of start from a standstill enables a good sprinting performance, since the engine is brought to the optimal running speed according to its power curve.

If the driver requires a "normal" start from a standstill, he keeps the running speed of the engine below the predetermined minimum, for example 1200 revolutions/minute; the control unit 1 keeps the clutch disengaged; when the engine is accelerated beyond this running speed with a gear engaged, the clutch is re-engaged by the actuator 4 which is subject to the control unit 1.

The push-button 11 is also useful in the event of difficulty in the engagement of gears when stationary; it is sufficent briefly to push the push-button 11 since this causes the entrainment of the clutch and therefore a movement in the meshing of the gears of the gearbox.

The use of the push-button 11 requires the conscious will of the driver to disengage the clutch; however, there are driving situations which require the disengagement of the clutch whilst the driver is busy. For example, in the event of abrupt braking achieved with the use of the handbrake, or in the event of a bend negotiated by the momentary locking of the rear wheels by means of the handbrake in order to place the vehicle "sideways on" according to a racing driving technique, the driver would simultaneously have to push the push-button 11 to isolate the wheels from the inertia of the engine. This is not always possible and at any rate is dangerous if the driver forgets to push the push-button 11.

According to the invention, therefore, the use is envisaged of the pressure switch 8, which is sensitive to variations in the pressure of the hydraulic liquid of the handbrake 9. The use of a hydraulic handbrake is preferable, due to considerations relating to braking power and safety of use, particularly in the case of high-performance cars, but, according to the invention, it is possible to provide for the use of a switch or other disengagement device which acts in response to the operation of a conventional handbrake, for example, a handbrake with flexible cables.

By pulling the handbrake lever 9, the driver pressurises the hydraulic liquid; this actuates the switch 8 which in turn sends a signal to the electronic control unit 1: this operates the actuator 4 which disengages the clutch. Naturally, the driver can also disengage the clutch by means of the push-button 11 situated on the steering wheel.

## Claims

1. A device (10) for the automatic engagement and disengagement of the clutch of a motor vehicle, which is particularly suitable for a four-wheel-drive racing car, including sensor means (3, 5, 6) for sensing the operating conditions of the gearbox (15) of the vehicle, sensor means (4', 7) for sensing the operating conditions of the engine (17) of the motor vehicle, and an electronic control unit (1) for processing the information generated by the sensors (3, 4', 5, 6, 7) and for generating signals in turn for an actuator (4) for the automatic engagement or disengagement of the clutch,
characterized in that
it also includes a sensor (8) of the handbrake (9) of the vehicle, which sensor (8) is connected to the electronic control unit (1), so that while driving the clutch is automatically disengaged as a result of activation of the handbrake (9).

2. A device according to Claim 1, in which the handbrake is hydraulic,
characterized in that
the sensor (8) is a pressure switch or pressure transmitter associated with the hydraulic circuit of the handbrake (9).

3. A device according to Claim 1 or Claim 2,
characterized in that
it also includes a manually-operated push-button (11) for the voluntary disengagement of the clutch, which is preferably situated on the steering wheel (12) of the motor vehicle and is connected to the electronic control unit (1).

## Patentansprüche

1. Vorrichtung (10) zum automatischen Ein- und Ausrücken einer Kupplung eines Kraftfahrzeugs, die insbesondere für ein Rennauto mit Vierradantrieb geeignet ist, mit Sensormitteln (3, 5, 6) zum Messen der Betriebsbedingungen des Getriebes (15) des Fahrzeugs, Sensormitteln (4', 7) zum Messen der Betriebsbedingungen des Motors (17) des Kraftfahrzeugs und einer elektronischen Steuereinheit (1) zum Verarbeiten der von den Sensoren (3, 4', 5, 6, 7) erzeugten Information und die daraus Signale für ein Betätigungsglied (4) für das automatische Ein- und Ausrücken der Kupplung erzeugt, **dadurch** **gekennzeichnet,** daß sie auch einen Sensor (8) für die Handbremse (9) des Fahrzeugs aufweist, der mit der elektronischen Steuereinheit (1) verbunden ist, so daß die Kupplung während der Fahrt automatisch durch eine Betätigung der Handbremse (9) ausgerückt wird.

2. Vorrichtung nach Anspruch 1, bei der die Handbremse hydraulisch ist, dadurch gekennzeichnet, daß der Sensor (8) ein Druckschalter oder Druckgeber ist, der mit dem Hydraulikkreis der Handbremse (9) verbunden ist.

3. Vorrichtung nach Anspruch 1 oder Anspruch 2, dadurch gekennzeichnet, daß sie auch eine von Hand betätigbare Taste (11) zum willkürlichen Ausrücken der Kupplung aufweist, die vorzugsweise am Lenkrad (12) des Kraftfahrzeugs angebracht und mit der elektronischen Steuereinheit (1) verbunden ist.

## Revendications

1. Dispositif (10) pour le serrage et desserrage automatique l'embrayage d'un véhicule automobile, qui est particulièrement bien approprié pour une voiture de course à quatre roues motrices, comprenant des moyens capteurs (3, 5, 6) destinés à capter les conditions de fonctionnement de la boîte de vitesses (15) du véhicule, des moyens capteurs (4', 7) destinés à capter les conditions de fonctionnement du moteur (17) du véhicule automobile et une unité de commande électronique (1) destinée à traiter l'information engendrée par les capteurs (3, 4', 5, 6, 7) et pour engendrer à son tour des signaux destinés à un actionneur (4) servant pour le serrage et le desserrage automatique de l'embrayage,
caractérisé
en ce qu'il comprend aussi un capteur (8) du frein à main (9) du véhicule, lequel capteur (8) est connecté à l'unité de commande électronique (1) de manière que, lorsqu'on conduit, l'embrayage soit automatiquement desserré en réponse à l'actionnement du frein à main (9).

2. Dispositif selon la revendication 1, dans lequel le frein à main est hydraulique
caractérisé
en ce que le capteur (8) est un détecteur manométrique ou transmetteur de pression associé au circuit hydraulique du frein à main (9).

3. Dispositif selon la revendication 1 ou 2,
caractérisé
en ce qu'il comprend aussi un bouton-poussoir (11) actionné manuellement servant à permettre le desserrage volontaire de l'embrayage, qui est de préférence situé sur le volant de direction (12) du véhicule automobile et est connecté à l'unité de commande électronique (1).
